# FASCICULE DE BREVET EUROPEEN

(11) **EP 0 694 242 B1**
(45) Date de publication et mention de la délivrance du brevet: **15.09.1999**
(21) Numéro de dépôt: 95902821.8
(22) Date de dépôt: 01.12.1994
(51) Int. Cl.: H04N 5/445, H04N 7/087, H04N 5/45

(54) **PROCEDE ET DISPOSITIF DE SELECTION DE PROGRAMMES VIDEO**
VERFAHREN UND VORRICHTUNG ZUR AUSWAHL VON VIDEOPROGRAMMEN
METHOD AND DEVICE FOR SELECTING VIDEO PROGRAMS

(30) Priorité: 01.12.1993 FR 9314410
(43) Date de publication de la demande: 31.01.1996
(73) Titulaire: THOMSON multimedia, 92648 Boulogne Cédex (FR)
(72) Inventeur: STEYER, Jean-Marie, F-92402 Courbevoie Cédex (FR); MAETZ, Yves, F-92402 Courbevoie Cédex (FR); NGUYEN, Jino, F-92402 Courbevoie Cédex (FR); TAZINE, Nour-Eddine, F-92402 Courbevoie Cédex (FR)
(74) Mandataire: Zhang, Jianguo
(86) Numéro de dépôt international: FR9401403
(87) Numéro de publication internationale: WO9515646

(56) Documents cités:
- EP-A- 0 488 379
- EP-A- 0 494 752
- WO-A-93/10605
- DE-A- 4 121 314
- GB-A- 2 227 901
- US-A- 5 047 867
- US-A- 5 157 496
- US-A- 5 223 924

## Description

La présente invention se rapporte à un procédé et à un dispositif de sélection de programmes vidéo. Elle s'applique dans le domaine de l'audiovisuel et plus particulièrement dans le cas où une multitude de chaînes de télévision sont disponibles à partir d'un même récepteur.

Le développement de la transmission par câble et par satellite permet au téléspectateur de disposer d'un nombre de chaînes de plus en plus important. Or, cet accroissement du choix des chaînes s'accompagne d'une augmentation de la complexité des dispositifs et procédés de commande des récepteurs. En effet, pour ne prendre qu'un exemple, on peut constater que l'ergonomie d'un système de télécommande de télévision conçu pour la réception d'un petit nombre de chaînes n'est pas du tout adaptée à la réception d'un nombre de chaînes beaucoup plus important. Dans ce dernier cas s'est développée une habitude du téléspectateur consistant à survoler rapidement les chaînes disponibles pour prendre connaissance des programmes en cours, ou encore à regarder plusieurs chaînes en sautant de l'une à l'autre de manière répétée.

L'invention a pour but de proposer un procédé de sélection de programmes vidéo permettant une sélection simple des programmes, même quand ceux-ci sont disponibles en grand nombre.

L'invention a pour objet un procédé de sélection de programmes dans un système de réception vidéo caractérisé en ce qu'il comprend les étapes de :
- réception d'une image mosaïque comportant une pluralité d'éléments d'identification de programmes disposés en mosaïque ;
- d'affichage de ladite image sur un moyen d'affichage (18) dudit système de réception ;
ledit système étant un système de vidéo numérique apte à recevoir des flux de données numériques, ledit procédé comporte en outre l'étape de :
- réception d'une table de correspondance permettant au système de réception de localiser les programmes identifiés par les éléments d'identification de ladite mosaïque dans les flux de données diffusés par des émetteurs ;
- de sélection d'un programme par sélection d'au moins un élément identificateur.

Selon un mode de réalisation particulier, le procédé conforme à l'invention comprend l'étape de sélection d'un programme par l'intermédiaire d'un moyen de commande du dit système comprenant des moyens de sélection disposés de manière similaire aux éléments d'identification, l'actionnement d'un moyen de sélection donné ayant pour conséquence la sélection du programme identifié par l'élément d'identification ayant même position que ledit moyen de sélection.

Ainsi, la disposition des éléments représentant au moins une partie des programmes est identique à celle des touches servant à les sélectionner.

Le terme "programme" désigne entre autres une chaîne de télévision ou une émission particulière. Dans les systèmes de transmission digitale, ce terme désigne aussi les services, bouquets de services et les événements.

Le terme "sélection" désigne entre autres l'action de visualiser la chaîne ou l'émission identifiée, l'action de commander un appareil d'enregistrement tel un magnétoscope pour enregistrer une émission identifiée.

Un élément d'identification peut comprendre entre autres un texte, un graphisme ou une image vidéo, fixe ou animée.

Un élément d'identification comprend par exemple une image fixe représentant la chaîne, l'émission ou le type d'émission auquel correspond le programme associé à cet élément.

La disposition des éléments d'identification peut être effectuée au niveau de l'émetteur ou dynamiquement au niveau du dispositif récepteur.

Selon un mode de réalisation particulier de l'invention, le moyen de commande est une télécommande, les moyens de sélection comprenant des touches de la dite télécommande.

Selon un mode de réalisation préférentiel, les moyens de sélection comprennent les touches 1 à 9 de la télécommande, disposées en trois rangs de trois éléments, neuf éléments d'identification étant disposés à l'écran en même temps, ces neuf éléments étant également disposés en trois rangs de trois éléments.

Selon une variante de réalisation, la télécommande comporte également des touches pour feuilleter plusieurs mosaïques de façon consécutive.

Selon un mode de réalisation particulier, ladite table de correspondance associe chaque élément d'identification à un canal de diffusion ou vice-versa.

Selon un mode de réalisation particulier, ladite table de correspondances contient notamment les informations nécessaires pour extraire lesdits programmes du flux de données.

Selon un mode de réalisation particulier, les images mosaïques sont mises à jour et diffusées en boucle, le décodeur sélectionnant l'image à afficher et mémorisant la table de correspondance associée.

Selon un mode de réalisation particulier, le système video comprend un décodeur de signaux digitaux compressés, par exemple de signaux au format MPEG2 ("Motion Picture Expert Group").

Selon un mode de réalisation particulier, les éléments d'identification sont transmis sous la forme d'images compressées du type "intra" au format de données MPEG2. Les images sont mises à jour et diffusées en boucle (en multiplexage avec d'autres données), le décodeur sélectionnant l'image à afficher. Chaque image est accompagnée de sa table de correspondance, d'un numéro d'ordre distinguant chaque table, et par conséquent chaque image d'une autre, ainsi que du nombre maximal de tables différentes.

Selon une autre caractéristique de la présente invention, le procédé conforme à l'invention s'applique à la manipulation d'un guide de programmes de télévision.

Selon ce dernier mode de réalisation, le guide de programmes comprend au moins une mosaïque d'éléments d'identification pour sélectionner l'intervalle de temps des programmes recherchés, au moins une mosaïque pour sélectionner le genre de programme, au moins une mosaïque pour afficher les programmes correspondants aux critères de temps et de genre, et au moins une mosaïque pour afficher des informations complémentaires pour chaque programme.

L'invention a aussi pour objet un décodeur dans un système de réception vidéo numérique, caractérisé en ce qu'il comprend :
- des moyens de réception d'un signal représentant un flux de transport de données vidéo compressées (21);
- des moyens de démodulation dudit signal (22);
- des moyens de décodage des données démodulées (17) et
- des moyens d'extraction (17), parmi lesdites données démodulées. d'au moins une image mosaïque comportant une pluralité d'éléments identificateurs de programmes (10, 23, 24) et de données correspondant à une table de correspondance (19) entre lesdits éléments identificateurs et des informations indiquant la localisation desdits programmes dans le flux de données démodulées.

Selon une variante de réalisation, ledit système comporte en outre des moyens de visualisation (18) desdits éléments d'identification sous la forme d'une mosaïque.

Selon une variante de réalisation, ledit système comporte en outre des moyens de sélection (1 à 9) disposés de manière similaire aux éléments d'identification sur ledit moyen de visualisation (18).

D'autres caractéristiques et avantages de l'invention apparaîtront à travers la description de deux exemples de réalisation particuliers non limitatifs, illustrés par les figures jointes, parmi lesquelles:
la figure 1 représente un ensemble d'éléments d'identification disposés de façon conforme au premier mode de réalisation,
la figure 2 représente une télécommande comportant un pavé numérique, une telle télécommande étant utilisée dans le premier mode de réalisation,
la figure 3 représente schématiquement la voie de transmission des images et d'informations supplémentaires du fournisseur de programmes à l'utilisateur,
la figure 4 représente un ensemble d'éléments d'identification selon le second mode de réalisation de l'invention.

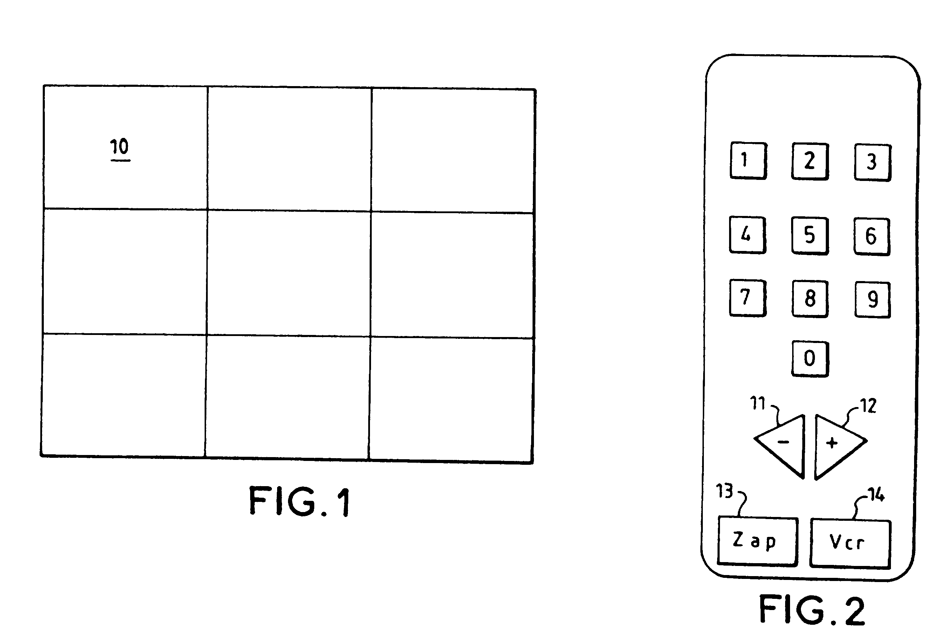

L'exemple particulier du procédé conforme à l'invention comporte une étape d'affichage à l'écran d'une mosaïque représentant un certain nombre d'éléments d'identification de programmes. Selon le premier mode de réalisation et tel qu'illustré à la figure 1, la mosaïque est composée de neuf rectangles tels que 10 dont chacun comporte une image réduite permettant facilement l'identification d'une émission particulière. Par exemple, une image réduite peut représenter l'affiche d'un film ou le logo d'une émission. Chaque élément d'identification représente l'émission en cours (ou disponible dans peu de temps) sur un des canaux disponibles.

La figure 2 montre une télécommande dont les touches 1 à 9 sont disposées selon une géométrie similaire à celle des éléments d'identification. L'actionnement de la touche supérieure gauche (en l'occurrence la touche 1) va conduire à la sélection de l'élément identificateur 10 en haut à gauche de l'image, schématisé sur la figure 1.

La sélection d'un élément identificateur va avoir pour conséquence la visualisation du canal correspondant.

L'ensemble des canaux ne peut pas forcément être représenté par une seule mosaïque. En conséquence, plusieurs mosaïques sont prévues. L'utilisateur peut passer d'une mosaïque à une autre en actionnant les touches Il et 12.

Lorsque l'utilisateur regarde un canal particulier, il peut passer en mode de visualisation des mosaïques en pressant la touche 13.

Lorsque l'utilisateur désire enregistrer un canal particulier, il appuie d'abord sur la touche 14, avant de sélectionner un élément identificateur. Le système de réception vidéo met alors en marche un appareil d'enregistrement et le programme en conséquence par des moyens connus par ailleurs.

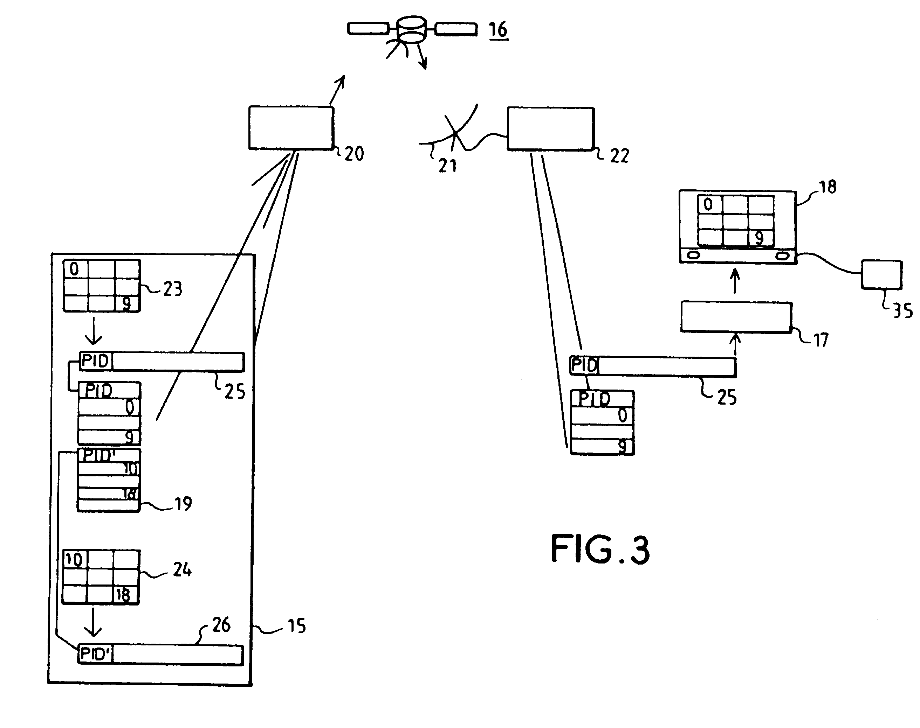

La figure 3 illustre schématiquement la voie de transmission utilisée pour les images des mosaïques et d'informations complémentaires. Selon le présent exemple, il s'agit là d'un système de transmission digital, où les données sont compressées avant transmission et décompressées au niveau du récepteur. Un tel système est en soi connu par ailleurs et utilise par exemple un format de données du type MPEG2. De plus amples informations concemant MPEG2 sont données dans le documents ISO/IEC 13818-1 (ISO/IEC/JTC1/SC29/WG11 N0601 MPEG2 Systems Working Draft) et ISO/IEC 13818-2 (Generic coding of moving pictures and associated audiO; Recommendation H.262 Committee Draft) de Novembre 1993. Le premier document décrit le format du flux de transport digital, ainsi que la transmission de données de service (notamment d'informations relatives aux programmes diffusés). Le second document décrit le système de compression et de décompression ainsi que le format des données compressées. MPEG2 permet notamment la transmission de données dites privées.

L'émetteur 15 doit transmettre deux types de données: les images représentant les mosaïques d'élements identificateurs d'une part, des tables de correspondance entre les éléments identificateurs et les canaux de diffusion d'autre part. Selon une variante de réalisation, les tables de correspondance comprennent pour chaque élément identificateur de la mosaïque les informations nécessaires pour retrouver le programme (ou des informations relatives au programme) dans le flux de données. La nature de ces informations dépend de l'organisation du flux de données.

De même, la table de correspondance permet de retrouver, à partir d'informations qui y sont contenues, l'élément identificateur correspondant.

Dans un premier temps, l'émetteur élabore les mosaïques à transmettre, en dépendance avec les chaînes ou émissions présentes. Les données vidéo et audio sont compressées de façon à obtenir un débit de données minimum. Les images mosaïque ne faisant pas partie d'une séquence présentant une grande correlation, la compression utilisée peut être du type "intra", c'est à dire que lors du décodage d'une image donnée, aucune référence à une autre image sera nécessaire. Les images choisies pour les éléments d'identification sont réduits grâce à des moyens connus, par exemple par un procédé d'interpolation et de décimation de l'image. L'ensemble des images mosaïques est transmis de façon continue, avec une fréquence qui dépend des capacités de transmission et de la quantité d'autres données

Dans la mesure où la transmission est digitale, le type de données transmis n'a que peu d'importance. De façon connue, les données sont transmises sous la forme de paquets de transport (25 ou 26) de 188 bits , ceux-ci comportant dans leurs en-têtes un code identificateur (PID ou "Packet identification data") identifiant leur contenu. Le document ISO/IEC 13818-1 cité ci-dessus indique dans son annexe F la constitution d'un paquet de transport.

Des codes réservés identifient les paquets de données correspondant à la transmission des images mosaïques et des tables de correspondance qui y sont associées. Le paquet contient alors l'en-tête, suivi d'une table de correspondance 19 et des données de l'image mosaïque (images 23 et 24). La table de correspondance 19 a simplement la forme d'une suite d'octets, dont chacun donne un numéro de PID correspondant au programme identifié. Elle comporte d'autre part un numéro d'ordre qui la distingue de toutes les autres tables transmises, ainsi que le nombre maximal de tables existantes.

MPEG 2 définit quatre tables de données de service concernant les programmes diffusés. Plus particulièrement deux de ces tables sont avantageusement mises en oeuvre par une variante du présent exemple. Il s'agit des tables d'association de programmes ("PAT") et de plan de programme ("PMT"). Ces tables ainsi que leur format sont décrits en détail dans le document 13818-1 déjà cité. La table PAT définit pour chaque programme (identifié par un numéro) le code d'identification PID du paquet de transport contenant la définition de ce programme. La définition d'un programme est contenue dans une table PMT qui elle même comporte notamment les codes d'identification PID des paquets qui contiennent les informations relatives à ce programme, et tout particulièrement les données audio et vidéo compressées.

La présence de ces tables dans le flux de données permet d'extraire de ce flux les données correspondant à un programme, connaissant le numéro de ce programme. Dans le cadre de la présente variante, ce sont ces numéros de programme qui sont contenus dans la table de correspondance.

La ou les tables de correspondance sont avantageusement mises sous la forme de tables privées ("Private section") telles que décrites dans le document 13818-1.

Selon une variante de réalisation, les images mosaïques compressées et les tables de correspondance sont transmises dans des paquets différents. Chacun des paquets contient alors un identificateur établissant le lien entre la mosaïque et la table.

Les données venant de l'émetteur sont multiplexées avec d'autres données et modulées de façon appropriée par un modulateur 20 pour la transmission par un satellite 16. Après réception par une antenne 21, les signaux sont démodulés par un démodulateur 22, démultiplexés avant d'être traités par un décodeur 17.

Lorsque l'utilisateur désire visualiser les mosaïques de programmes, il entre en mode "ZAP" en appuyant sur la touche 13 correspondante. (Le procédé de communication entre la télécommande et le récepteur de télévision ou le décodeur ne sera pas décrit avec plus de détail, de nombreuses réalisations étant connues de l'homme du métier). Le décodeur surveille alors le flux de données. Lorsqu'il détecte un PID correspondant à une image mosaïque, il vérifie le numéro d'ordre de la table associée. Si ce numéro est le premier numéro dans l'ordre qui a été fixé (par exemple pour des raisons de présentation cohérente des images), le décodeur décompresse et affiche l'image mosaïque et mémorise la table de correspondance, le numéro d'ordre et le nombre maximal de tables dans une mémoire vive appropriée. Si le numéro d'ordre n'est pas le premier, le décodeur continue sa surveillance. L'affichage s'effectue sur un écran 18.

Selon une variante de ce mode de réalisation particulier de l'invention, le décodeur affiche la première image mosaïque rencontrée.

Selon une variante de ce mode de réalisation particulier, le décodeur utilise l'option "Freeze mode" de MPEG2, permettant d'afficher une image fixe.

L'appui par l'utilisateur sur une des touches 1 à 9 de la télécommande a alors pour effet une commutation vers le canal correspondant à l'élément d'identification sélectionné. Ceci est réalisé grâce à la connaissance des codes PID des paquets de transports correspondant à ce canal ou programme. Comme cela a été mentionné ci-dessus, les codes PID sont transmis soit directement dans la table de correspondance, soit extraits des tables PAT et PMT. Dans ce demier cas, on évite une certaine redondance dans la transmission des données.

Lorsque l'utilisateur appuie sur l'une des touches + ou - (touches Il ou 12 respectivement), le décodeur décrémente ou incrémente le numéro d'ordre mémorisé et surveille le flux de données jusqu'à détection du paquet correspondant. La valeur mémorisée du nombre maximal de tables sert à éviter la recherche d'une table qui n'existerait pas. L'incrémentation n'est possible que si le numéro d'ordre maximal n'est pas dépassé.

Selon une variante de ce mode de réalisation, les éléments identificateurs sont transmis de façon séparée et non sous forme de mosaïque. Dans ce cas, ces éléments sont réordonnés par le décodeur avant l'affichage.

Une touche "VCR" 14 permet de passer en mode d'enregistrement. Le programme sélectionné est alors enregistré sur un appareil d'enregistrement, par exemple un magnétoscope 35.

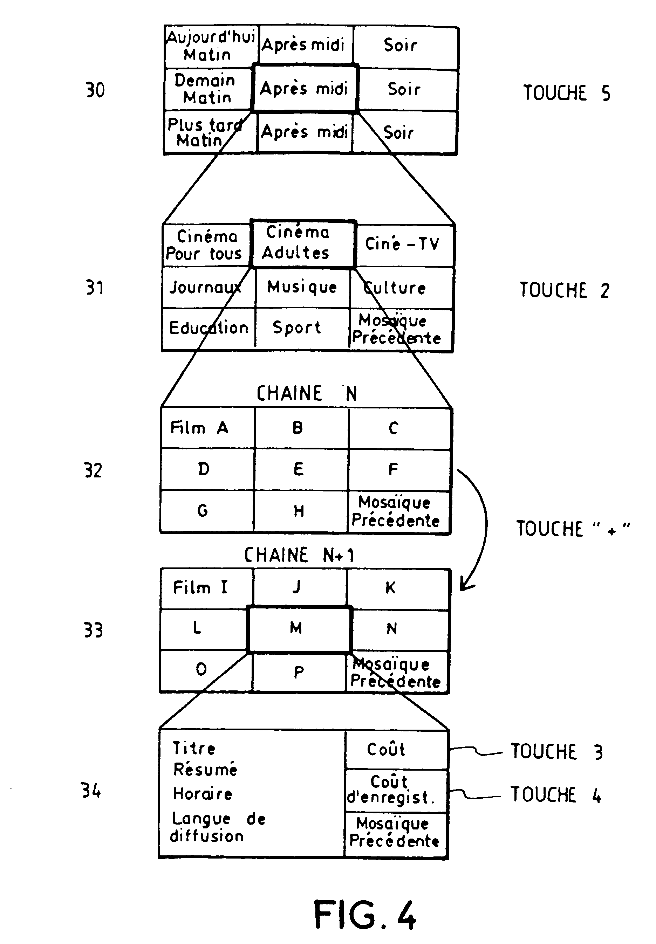

Selon le second mode de réalisation de l'invention, et tel qu'illustré à la figure 4, le procédé de sélection de programmes conforme à l'invention est utilisé pour la manipulation d'un guide de programmes de télévision affiché sur écran.

Comme dans le précédent exemple, les mosaïques sont composées de neuf éléments d'identification, disposés de manière similaire aux neuf touches 1 à 9 de la télécommande. La télécommande est la même que dans l'exemple précédent.

Selon le présent exemple, le guide de programmes est organisé en arbre. Lorsqu'un élément d'identification est sélectionné dans une mosaïque donnée, la sélection a pour effet l'affichage d'une autre mosaïque donnant des informations plus précises. La mosaïque 30 est un filtre temporel qui permet de sélectionner le jour et la plage horaire sur lesquelles on désire être informé (par exemple, demain, l'après midi). L'appui sur la touche 5 de la télécommande entraîne l'affichage d'un second filtre sous la forme d'une mosaïque 31, permettant de sélectionner le genre d'émission recherché (cinéma, musique, sport, journaux ...). Si l'on sélectionne alors par exemple "Cinema pour adultes", une mosaïque 32 dont chaque élément donne un titre de film est affichée, ceci pour une chaîne donnée. Ce sont les films du genre considéré visibles pendant l'intervalle de temps sélectionné et ceci sur une chaîne donnée. Il est alors possible de changer de chaîne en actionnant les touches + ou - (touches Il ou 12) (mosaïque 13). La sélection d'un film a pour conséquence l'affichage d'informations complémentaires concernant ce film, par exemple son prix de visualisation ou d'enregistrement s'il s'agit d'un film sur une chaîne de télévision à péage (mosaïque 34).

Le guide peut bien évidemment être organisé de manière différente.

Les éléments d'identification peuvent comprendre du texte et/ou des images, le choix dépendant de l'application, des capacités du canal de transmission et de la mémoire vive disponible au niveau du récepteur pour le stockage des données. Lorsqu'il s'agit de texte, celui-ci peut être envoyé sous la forme codée ASCII, et non sous la forme d'une image vidéo, ce qui permet un gain de place et de rapidité de transmission. Avantageusement, toutes les données concernant le guide sont transmises en une seule fois, de façon à ce que le décodeur n'aie pas à recharger de données après chaque sélection. Ceci est d'autant plus avantageux que le nombre de mosaïques possible est important: étant donné qu'une sélection est effectuée parmi un grand nombre de programmes suivant certains critères, il est plus simple de composer les mosaïques au niveau du dispositif récepteur que de les transmettre une à une.

Les données composant le guide de programmes sont diffusées en boucle. Selon une variante de réalisation et dans le but de diminuer la taille de la mémoire nécessaire dans le décodeur, on ne charge des données qu'en temps voulu, en surveillant leur passage dans le flux de données. Une fois obsolètes, ces données sont remplacées par d'autres. Suivant la durée de la boucle de diffusion, les données seront disponibles après une attente plus ou moins longue.

De même que précédemment, les informations transmises le sont par paquets de données. Les tables de correspondance identifient soit un lien entre différentes mosaïques, soit un canal, et peuvent contenir d'autres types d'informations.

Selon une variante de ce mode de réalisation, on prévoit un élément d'identification ("Mosaïque précédente") permettant de remonter à la mosaïque de niveau immédiatement supérieur.

II est bien évident qu'il est possible de définir des mosaïques différentes, avec plus ou moins de neuf éléments d'identification, et de prévoir une télécommande en conséquence. De même, le fait d'utiliser plusieurs mosaïques ayant un nombre d'éléments identificateurs différents ne sort pas du cadre de l'invention.

Selon une variante supplémentaire, la mosaïque comporte un nombre d'éléments d'identification plus élevé que le nombre de touches de la télécommande destinées à la sélection de programmes.

## Revendications

1. Procédé de sélection de programmes dans un système de réception vidéo caractérisé en ce qu'il comprend les étapes de :
- réception d'une image mosaïque comportant une pluralité d'éléments d'identification de programmes disposés en mosaïque ;
- d'affichage de ladite image sur un moyen d'affichage (18) dudit système de réception ;
ledit système étant un système de vidéo numérique apte à recevoir des flux de données numériques, ledit procédé comporte en outre l'étape de :
- réception d'une table de correspondance permettant au système de réception de localiser les programmes identifiés par les éléments d'identification de ladite mosaïque dans les flux de données diffusés par des émetteurs ;
- de sélection d'un programme par sélection d'au moins un élément identificateur.

2. Procédé selon la revendication 1, caractérisé en ce qu'une table comporte un numéro indiquant si l'image mosaïque associée à cette table est ou non la première image mosaïque d'une série d'images mosaïque.

3. Procédé selon la revendication 2, caractérisé en ce que ledit procédé comporte en outre l'étape de surveillance des numéros des tables transmises et d'affichage de la première image mosaïque lorsque celle-ci a été détectée.

4. Procédé selon l'une des revendications 1 à 3, caractérisé en ce qu'une table comporte un numéro qui identifie une table par rapport aux autres tables transmises.

5. Procédé selon l'une des revendications 1 à 4, caractérisé en ce que l'information décrivant la localisation d'un programme est un lien vers une autre image mosaïque.

6. Procédé selon l'une des revendications 1 à 5, caractérisé en ce qu'une table associe à chaque élément d'identification (10) un canal de diffusion et vice-versa.

7. Procédé selon l'une des revendications 1 à 4, caractérisé en ce que la sélection d'un élément d'identification a pour conséquence la visualisation ou l'enregistrement du programme identifié.

8. Procédé selon l'une des revendications 1 à 7, caractérisé en ce que ladite table contient notamment les informations nécessaires pour extraire lesdits programmes des flux de données.

9. Procédé selon l'une des revendications précédentes, caractérisé en ce que les images sont mises à jour et diffusées en boucle, le système de réception sélectionnant une image à afficher et mémorisant la table associée.

10. Procédé selon l'une des revendications précédentes, caractérisé en ce qu'il est appliqué à la manipulation d'un guide de programmes de télévision.

11. Procédé selon la revendication 10, caractérisé en ce que le guide de programmes comprend au moins une mosaïque d'éléments d'identification pour sélectionner l'intervalle de temps des programmes recherchés (30), au moins une mosaïque pour sélectionner le genre de programme (31), au moins une mosaïque pour afficher les programmes correspondant aux critères de temps et de genre (32), et au moins une mosaïque pour afficher des informations complémentaires pour chaque programme (34).

12. Procédé selon l'une des revendications précédentes, caractérisé en ce qu'il comporte l'étape de sélection d'un programme par l'intermédiaire d'un moyen de commande dudit système, comprenant des moyens de sélection (1 à 9) disposés de manière similaire aux éléments d'identification, l'actionnement d'un moyen de sélection (1 à 9) donné ayant pour conséquence la sélection du programme identifié par l'élément d'identification ayant la même position que ledit moyen de sélection.

13. Procédé selon la revendication précédente, caractérisé en ce que ledit moyen de commande est une télécommande, les moyens de sélection comprenant des touches de ladite télécommande (1 à 9).

14. Procédé selon la revendication 13, caractérisé en ce que les moyens de sélection comprennent les touches numériques 1 à 9 de la télécommande.

15. Procédé selon l'une des revendications 13 ou 14, caractérisé en ce que ladite télécommande comporte également des touches (11, 12) pour feuilleter plusieurs mosaïques de façon consécutive.

16. Décodeur dans un système de réception vidéo numérique, caractérisé en ce qu'il comprend :
- des moyens de réception d'un signal représentant un flux de transport de données vidéo compressées (21);
- des moyens de démodulation dudit signal (22);
- des moyens de décodage des données démodulées (17) et
- des moyens d'extraction (17), parmi lesdites données démodulées, d'au moins une image mosaïque comportant une pluralité d'éléments identificateurs de programmes (10, 23, 24) et de données correspondant à une table de correspondance (19) entre lesdits éléments identificateurs et des informations indiquant la localisation desdits programmes dans le flux de données démodulées.

## Patentansprüche

1. Verfahren zur Auswahl von Programmen in einem Video-Empfangssystem, gekennzeichnet durch folgenden Schritte:
- Empfang eines mosaikförmigen Bildes mit mehreren Identifizierelementen für mosaikförmig angeordnete Programme,
- Wiedergabe des Bildes auf einem Wiedergabemittel (18) des Empfangssystems, wobei das System ein digitales Videosystem zum Empfang von digitalen Datenfolgen ist und das Verfahren außerdem die folgenden Schritte enthält:
- Empfang einer Zuordnungstabelle, die es dem Empfangssystem ermöglicht, die identifizierten Programme durch die Identifizierelemente des Mosaiks in den durch die Sender gesendeten Datenfolgen zu lokalisieren,
- Auswahl eines Programms durch die Auswahl wenigstens eines Identifizierelementes.

2. Verfahren nach Anspruch 1, dadurch gekennzeichnet, daß eine Tabelle eine Zahl enthält, die anzeigt, ob das der Tabelle zugeordnete mosaikförmige Bild das erste mosaikförmige Bild einer Reihe von mosaikförmigen Bildern ist oder nicht.

3. Verfahren nach Anspruch 2, dadurch gekennzeichnet, daß das Verfahren außerdem einen Schritt zum Überwachen der Zahlen der übertragenen Tabellen und zur Wiedergabe des ersten mosaikförmigen Bildes enthält, wenn dieses ermittelt wurde.

4. Verfahren nach einem der Ansprüche 1 bis 3, dadurch gekennzeichnet, daß eine Tabelle eine Zahl enthält, die eine Tabelle aus den anderen übertragenen Tabellen identifiziert.

5. Verfahren nach einem der Ansprüche 1 bis 4, dadurch gekennzeichnet, daß die Informationen, die die Lage eines Programms beschreiben, ein Bindeglied zu einem anderen mosaikförmigen Bild darstellen.

6. Verfahren nach einem der Ansprüche 1 bis 5, dadurch gekennzeichnet, daß eine Tabelle jedem Identifizierelement (10) einen Sendekanal und umgekehrt zuordnet.

7. Verfahren nach einem der Ansprüche 1 bis 4, dadurch gekennzeichnet, daß die Auswahl eines Identifizierlements die sichtbare Darstellung oder die Speicherung des identifizierten Programms zur Folge hat.

8. Verfahren nach einem der Ansprüche 1 bis 7, dadurch gekennzeichnet, daß die Tabelle insbesondere die Informationen enthält, die notwendig sind, um die Programme aus den Datenfolgen zu extrahieren.

9. Verfahren nach einem der vorangehenden Ansprüche, dadurch gekennzeichnet, daß die Bilder aktualisiert und schleifenförmig gesendet werden und das Empfangssystem ein Bild für die Wiedergabe und die Speicherung der zugeordneten Tabelle auswählt.

10. Verfahren nach einem der vorangehenden Ansprüche, dadurch gekennzeichnet, daß es für die Manipulation eines Führers für Fernsehprogramme angewendet wird.

11. Verfahren nach Anspruch 10, dadurch gekennzeichnet, daß der Programmführer wenigstens ein mosaikförmiges Identifizierelement zur Auswahl des Zeitintervalls der gesuchten Programme (30), wenigstens ein Mosaik zur Auswahl der Programmart (31), wenigstens ein Mosaik zur Wiedergabe der den Zeit- und Artkriterien (32) entsprechenden Programme und wenigstens ein Mosaik zur Wiedergabe der zusätzlichen Informationen für jedes Programm (34) enthält.

12. Verfahren nach einem der vorangehenden Ansprüche, gekennzeichnet durch den Schritt der Auswahl eines Programms durch ein Steuermittel des Systems, das Auswahlmittel (1 bis 9) enthält, die in ähnlicher Weise wie die Identifizierelemente angeordnet sind, wobei die Betätigung eines Auswahlmittels (1 bis 9) für die Daten die Auswahl eines Programms zur Folge hat, das durch das Identifizierelement identifiziert wird, das dieselbe Lage hat wie die Auswahlmittel.

13. Verfahren nach den vorangehenden Anspruch, dadurch gekennzeichnet, daß die Steuermittel durch eine Fernbedieneinheit gebildet sind und die Auswahlmittel Tasten auf der Fernbedieneinheit (1 bis 9) enthalten.

14. Verfahren nach Anspruch 13, dadurch gekennzeichnet, daß die Auswahlmittel die Zifferntasten 1 bis 9 der Fernbedieneinheit enthalten.

15. Verfahren nach einem der Ansprüche 13 oder 14, dadurch gekennzeichnet, daß die Fernbedieneinheit außerdem Tasten (11, 12) zum Überfliegen mehreren Mosaike nacheinander enthält.

16. Dekoder in einem digitalen Video-Empfangssystem, gekennzeichnet durch:
- Mittel zum Empfang eines Signals, das einen Datenfluß von komprimierten Videodaten (21) darstellt,
- Mittel zur Demodulation des Signals (22),
- Mittel zur Dekodierung der demodulierten Daten (17) und
- Mittel zum Extrahieren (17) wenigstens eines mosaikförmigen Bildes mit mehreren Identifizierelementen für die Programme (10, 23, 24) und der einer Zuordnungstabelle entsprechenden Daten zwischen den Identifizierelementen und den Informationen, die die Lage der Programme in dem Fluß der demodulierten Daten anzeigen, aus den demodulierten Daten.

## Claims

1. Process for selecting programmes in a video reception system characterized in that it comprises the steps of:
- receiving a mosaic image comprising a plurality of programme identification elements arranged in a mosaic;
- displaying the said image on a display means (18) of the said reception system;
the said system being a digital video system able to receive digital data streams, the said process furthermore comprises the step of:
- receiving a correspondence table allowing the reception system to locate the programmes identified by the identification elements of the said mosaic within the data streams broadcast by transmitters;
- of selecting a programme by selecting at least one identifier element.

2. Process according to Claim 1, characterized in that a table comprises a serial number indicating whether or not the mosaic image associated with this table is the first mosaic image of a series of mosaic images.

3. Process according to Claim 2, characterized in that the said process furthermore comprises the step of monitoring the serial numbers of the tables transmitted and of displaying the first mosaic image when the latter has been detected.

4. Process according to one of Claims 1 to 3, characterized in that a table comprises a serial number which identifies a table with respect to the other tables transmitted.

5. Process according to one of Claims 1 to 4, characterized in that the cue describing the location of a programme is a link to another mosaic image.

6. Process according to one of Claims 1 to 5, characterized in that a table associates a broadcasting channel with each identification element (10) and vice-versa.

7. Process according to one of Claims 1 to 4, characterized in that the consequence of selecting an identification element is the viewing or the recording of the identified programme.

8. Process according to one of Claims 1 to 7, characterized in that the said table contains in particular the cues necessary to extract the said programmes from the data streams.

9. Process according to one of the preceding claims, characterized in that the images are updated and broadcast in a loop, the reception system selecting an image to be displayed and storing the associated table.

10. Process according to one of the preceding claims, characterized in that it is applied to the manipulation of a television programme guide.

11. Process according to Claim 10, characterized in that the programme guide comprises at least one mosaic of identification elements for selecting the time interval of the sought-after programmes (30), at least one mosaic for selecting the programme category (31), at least one mosaic for displaying the programmes corresponding to the time and category criteria (32), and at least one mosaic for displaying complementary cues for each programme (34).

12. Process according to one of the preceding claims, characterized in that it comprises the step of selecting a programme by way of a control means of the said system, comprising selection means (1 to 9) arranged in a similar manner to the identification elements, the consequence of actuating of a given selection means (1 to 9) being the selection of the programme identified by the identification element having the same position as the said selection means.

13. Process according to the preceding claim, characterized in that the said control means is a remote control, the selection means comprising buttons of the said remote control (1 to 9).

14. Process according to Claim 13, characterized in that the selection means comprise the numerical buttons (1 to 9) of the remote control.

15. Process according to one of Claims 13 or 14, characterized in that the said remote control also comprises buttons (11, 12) for leafing through several mosaics consecutively.

16. Decoder in a digital video reception system, characterized in that it comprises:
- means of receiving a signal representing a compressed video data transport stream (21);
- means of demodulating the said signal (22);
- means of decoding the demodulated data (17) and
- means (17) for extracting, from the said demodulated data, at least one mosaic image comprising a plurality of programme identifier elements (10, 23, 24) and data corresponding to a table (19) of correspondence between the said identifier elements and cues indicating the location of the said programmes in the demodulated data stream.
